# FASCICULE DE BREVET EUROPEEN

(11) **EP 0 932 063 B1**
(45) Date de publication et mention de la délivrance du brevet: **03.06.2009**
(21) Numéro de dépôt: 99400103.0
(22) Date de dépôt: 18.01.1999
(51) Int. Cl.: G02B 6/44

(54) **Câble à tube métallique sensiblement étanche logeant au moins un conducteur optique et un produit absorbant l'hydrogène**
Kabel mit dichter metallischer Röhre beinhaltend mindestens einen optischen Leiter sowie ein Wasserstoff absorbierendes Produkt
Cable with metallic tight tube comprising at least one optical conductor and an hydrogene absorbing substance

(30) Priorité: 26.01.1998 FR 9800770
(43) Date de publication de la demande: 28.07.1999
(73) Titulaire: Draka Comteq B.V., 1083 HJ Amsterdam (NL)
(72) Inventeur: Bonicel, Jean Pierre, 92500 Rueil Malmaison (FR)
(74) Mandataire: Blokland, Arie

(56) Documents cités:
- EP-A- 0 632 301
- GB-A- 2 172 410
- US-A- 4 725 123
- US-A- 4 741 592
- US-A- 4 767 182
- PATENT ABSTRACTS OF JAPAN vol. 014, no. 261 (C-0725), 6 juin 1990 (1990-06-06) & JP 02 075657 A (MITSUBISHI KASEI CORP), 15 mars 1990 (1990-03-15)
- SVERCHKOVA A.K.; ANDREEV L.A.; MINAEV YU A.: 'Effect of crystal structure on the solubility of hydrogen in copper' METAL SCIENCE AND HEAT TREATMENT vol. 31, no. 11-12, 01 Novembre 1989, SPRINGER, NEW YORK, NY, US, pages 833 - 836, XP009097392
- ROGERS H.C.: 'Hydrogen embrittlement of metals' SCIENCE vol. 159, no. 3819, 08 Mars 1968, AMERICAN ASSOCIATION FOR THE ADVANCEMENT OF SCIENCE, US, WASHINGTON, DC, pages 1057 - 1064, XP009097350

## Description

L'invention est relative à un câble à tube métallique sensiblement étanche logeant un ou plusieurs conducteurs optiques et un produit absorbant l'hydrogène.

Les conducteurs optiques sont couramment utilisés dans le domaine des télécommunications. Les informations lumineuses sont généralement transmises à une longueur d'onde d'environ 1300 ou 1550 nanomètres par des fibres optiques à base de silice. Chaque fibre est protégée par des couches en matériau polymère et les couches de protection sont le plus souvent recouvertes d'un autre polymère pigmenté.

Un ensemble de fibres optiques peut être assemblé pour former un ruban. Dans ce cas le matériau du ruban est également un polymère.

Les fibres optiques, individuelles ou en ruban, sont disposées dans un tube métallique ou un tube en matière plastique.

On sait que les fibres optiques ne doivent pas être exposées à l'hydrogène car ce gaz altère leurs propriétés de transmission et, éventuellement, leurs propriétés mécaniques. L'altération est d'autant plus importante qu'est élevée la pression partielle d'hydrogène à laquelle est soumise la fibre.

L'hydrogène provient, notamment, de la décomposition des polymères constituant les revêtements des fibres ou le matériau d'assemblage des fibres en ruban. Il peut aussi provenir de la décomposition du produit de remplissage généralement prévu dans un tube afin de permettre le maintien des fibres dans ce tube et de s'opposer à la progression de l'humidité en cas de rupture ou dégradation du tube.

Les décompositions mentionnées ci-dessus interviennent naturellement du fait du vieillissement.

Quand le tube est en matière plastique, la perméabilité de ce matériau permet la diffusion de l'hydrogène. Par contre, quand le tube est métallique, ou en un autre matériau non poreux, l'hydrogène reste confiné dans le tube et les propriétés optiques des fibres se dégradent donc progressivement.

Pour résoudre ce problème, une solution consiste à utiliser un tube en acier inoxydable de façon à ne pas créer de corrosion génératrice d'hydrogène et à prévoir un produit de remplissage ayant des propriétés d'absorption de l'hydrogène. Ce produit de remplissage est par exemple un polymère, notamment un polymère non saturé auquel est généralement mélangé un catalyseur, tel que du palladium.

L'acier inoxydable et le mélange de polymère avec un catalyseur constituent des matériaux onéreux.

L'invention remédie à cet inconvénient. Elle permet de se passer d'un mélange de polymère et d'acier inoxydable.

Elle est caractérisée en ce que le tube métallique du câble est recouvert au moins partiellement, de préférence pratiquement totalement, sur sa paroi interne par une couche en un matériau catalyseur facilitant l'absorption d'hydrogène par le produit prévu à cet effet, ladite couche étant elle-même recouverte au moins partiellement, de préférence pratiquement totalement, par au moins une couche du produit absorbant l'hydrogène comprenant au moins un polymère. Dans un mode de réalisation, le produit absorbant l'hydrogène constitue le matériau de remplissage. Dans un autre mode de réalisation, ce produit absorbant l'hydrogène forme seulement une couche en contact avec le catalyseur.

L'invention résulte en effet de la constatation qu'il n'était pas indispensable de mélanger le catalyseur au produit, en général organique, absorbant l'hydrogène. Il suffit de disposer le catalyseur en contact avec le produit absorbant l'hydrogène, l'endroit le plus approprié étant la surface interne du tube. Avec cette disposition, l'effet de catalyse est, en principe, moins efficace que lorsque le catalyseur est mélangé au produit de remplissage, car, avec l'invention, la surface spécifique du catalyseur en contact avec le produit absorbant l'hydrogène est moins grande que la surface spécifique correspondante dans le cas du mélange. Toutefois, on a constaté que, malgré ce handicap, l'effet d'absorption d'hydrogène reste satisfaisant.

On peut cependant augmenter la surface spécifique du catalyseur en contact avec le produit absorbant l'hydrogène, c'est-à-dire l'efficacité de la catalyse, en conférant une rugosité sélectionnée à la surface du catalyseur. Cette rugosité peut être réalisée par exemple en pulvérisant le catalyseur sous forme granuleuse ou en prévoyant des rainures, notamment longitudinales, à la surface du catalyseur.

Le tube peut être fabriqué à partir d'une bande de métal recouverte sur sa surface interne du matériau catalyseur, la bande étant soumise à un formage de façon à lui conférer la forme d'un tube, les bords longitudinaux de la bande de métal étant soudés après avoir introduit le ou les conducteurs optiques ainsi que le produit de remplissage dans le tube préformé.

En variante, au lieu de procéder à un soudage, une rive longitudinale de la bande métallique est appliquée sur l'autre rive longitudinale et on procède à un collage de ces rives. Dans le cas où le produit absorbant l'hydrogène constitue une couche en contact avec le catalyseur, le collage peut être réalisé à l'aide de cette couche constituée, par exemple, de copolymères. Avec cette variante, le tube est moins étanche que dans le cas d'un soudage. Cependant, le défaut d'étanchéité est insuffisant pour permettre l'évacuation naturelle de l'hydrogène, et il est donc nécessaire de prévoir le produit absorbant l'hydrogène. Mais, dans ce cas, l'absorption d'hydrogène n'a pas besoin d'être aussi efficace que lorsque le tube est étanche.

Le catalyseur sera choisi de préférence de manière telle qu'il protège le tube métallique contre la corrosion. Ainsi, l'utilisation d'un acier inoxydable ne s'impose plus. On peut aussi recouvrir la surface extérieure du tube avec le même matériau que celui recouvrant sa surface interne.

Dans un exemple, le tube métallique comporte de l'acier, notamment de l'acier doux, et le revêtement interne de ce tube comporte du nickel et/ou du chrome qui exerce la fonction combinée de catalyse et de protection de l'acier contre la corrosion. Dans ce cas, il est avantageux de nickeler et/ou de chromer les deux faces (intérieure et extérieure) de façon à protéger entièrement le tube contre la corrosion.

Le produit absorbant l'hydrogène comprendre un polymère qui est par exemple choisi dans le groupe formé par l'EVA (Ethylène Vinyl Acétate) et l'EEA (Ethylène Ethyl Acrylate). Par exemple il peut être judicieux de choisir comme métal pour fabriquer le tube un acier commercial comportant un acier notamment doux revêtu d'une couche métallique par exemple du nickel et/ou du chrome, lui-même recouvert d'une couche de polymère tel que l'EVA et/ou l'EEA, qui peut avantageusement permettre de coller le tube lors de sa formation.

Le produit absorbant l'hydrogène comprend une matière organique, de préférence un polymère qui présente des doubles liaisons (diènes) qui s'ouvrent en présence du catalyseur et qui facilitent la fixation de l'hydrogène sur ces doubles liaisons ouvertes. L'avantage de ce type de polymères est qu'il n'y a pas production d'eau prisonnière du câble , en particulier dans le cas où le câble est quasiment hermétique, par transformation de l'hydrogène en eau, et donc le risque de fatigue de la fibre optique en présence d'eau est moindre. Le matériau de remplissage est, par exemple, à base de silicone ou de polyoléfine et comprend, dans ce dernier cas, un polybutadiène ou un polyéthylène glycole ou une combinaison de ces deux produits.

Quand le produit, destiné à absorber l'hydrogène, est à base d'un polymère, on peut utiliser comme catalyseur au moins l'un des métaux de la classe des platinoïdes, c'est-à-dire l'un des éléments du groupe VIII, périodes 4, 5 et 6, du tableau de la classification périodique des éléments, et de préférence, outre le nickel : le cobalt, le palladium et le chrome.

D'autres caractéristiques et avantages de l'invention apparaîtront avec la description de certains de ses modes de réalisation, celle-ci étant effectuée en se référant aux dessins ci-annexés sur lesquels :
- la figure 1 est un schéma en coupe d'un câble selon une variante de l'invention,
- la figure 2 est un schéma représentant un procédé de fabrication dudit câble selon l'invention, et
- la figure 3 est un schéma d'une bande servant à la fabrication d'un câble selon une autre variante de l'invention.

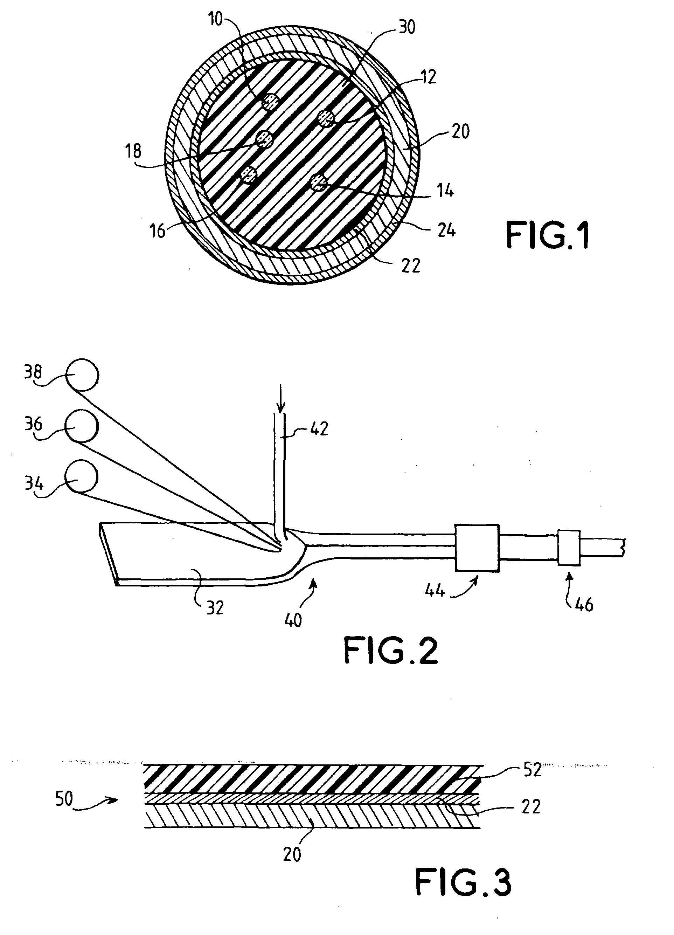

Le câble représenté sur la figure 1 comporte une pluralité de fibres optiques 10, 12, 14, 16 et 18 disposées à l'intérieur d'un tube 20 en acier doux dont la face intérieure est recouverte d'une couche 22 de nickel et/ou de chrome. L'épaisseur n'a pas d'importance. Toutefois, pour des raisons pratiques de fabrication, il est préférable que l'épaisseur de la couche de catalyseur soit d'au moins 1 micron. La surface extérieure du tube 20 est également recouverte d'une couche de protection 24, aussi en nickel et/ou en chrome.

La proportion de carbone dans l'acier constituant le tube 20 est ajustée pour obtenir une dureté permettant, d'une part, le formage du tube, comme décrit en relation avec la figure 2, et d'autre part, la résistance nécessaire pour ce type de câble.

Le tube 20 est rempli par un produit de remplissage 30 dans lequel sont noyées les fibres optiques 10 à 18. Ce produit de remplissage a pour rôle, d'une part, d'empêcher la progression de l'eau à l'intérieur du tube dans le cas où ce dernier présente un défaut d'étanchéité accidentelle et, d'autre part, il constitue un matériau absorbant l'hydrogène. Le nickel et/ou le chrome recouvrant en une couche 22 la surface interne du tube 20 constitue un catalyseur de la réaction d'absorption de l'hydrogène par le produit absorbant 30.

Ce matériau absorbant est, par exemple, à base de silicone ou de polyoléfine. Dans ce dernier cas, il s'agira d'un polybutadiène ou d'un polyéthylène glycole ou d'une combinaison de ces deux produits. De façon générale, le matériau de remplissage présente des doubles liaisons (diènes) qui s'ouvrent en présence d'un catalyseur et qui facilitent la fixation de l'hydrogène sur ces doubles liaisons ouvertes. Pour ce matériau de remplissage, on peut aussi faire appel à un polymère non saturé choisi parmi des homopolymères non saturés obtenus au moyen de la polymérisation de monomères choisis parmi le butadiène, le pentadiène, le méthylbutadiène et le chloro-2-butadiène. On peut aussi choisir des copolymères ou des terpolymères non saturés obtenus au moyen de la polymérisation entre un premier monomère, choisi parmi le butadiène, le pentadiène, le méthylbutadiène et le chloro-2-butadiène, et un deuxième et/ou troisième monomère choisi parmi le styrène, la vynil-4-pyrédine et l'acrylonitrile. Il est également possible de choisir des polymères non saturés obtenus en greffant sur des homopolymères non saturés ou les copolymères ou terpolymères non saturés, de monomères contenant au moins un groupe non saturé, choisi parmi le vinyle, l'allyle et des mélanges de ces derniers ; ces monomères contiennent au moins un groupe non saturé après l'étape de greffage.

Dans le cas où le produit absorbant est à base de silicone, on peut utiliser un composé organique de type silicone saturé correspondant à la formule générale ci-dessous :

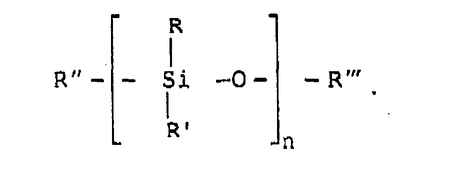

Dans cette formule, R et R' sont identiques ou différents et représentent des groupes alkyle, alcényle ou aryle ; R" et R"' sont identiques ou différents et représentent un groupe alcényle, et n est un nombre entier. Dans la formule ci-dessus, on peut aussi choisir R et R' parmi les radicaux aliphatiques saturés ou insaturés, et les radicaux aromatiques ; dans ce cas, R" et R"' sont des radicaux aliphatiques insaturés.

Pour réaliser le tube représenté sur la figure 1, on peut procéder comme décrit ci-dessous en relation avec la figure 2.

Pour former le tube 20, on part d'une bande 32 en acier doux nickelée et/ou chromée sur ses deux faces et de bobines 34, 36, 38 de conducteurs optiques qu'on déroule. La bande 32 est mise en forme de tube 20 à une station 40. Le produit de remplissage est introduit dans le tube au niveau de la station 40 de formage. Le moyen de remplissage a été représenté de façon symbolique sur le dessin par un conduit 42.

A la suite de la station de formage 40, on prévoit une station de soudage 44, par exemple un soudage électrique ou un soudage à chaud au laser, de façon à souder ensemble les bords longitudinaux de la bande 32 après son formage.

A la suite de la station de soudage 44, on prévoit une station 46 de rétreint du tube. Le câble est entièrement terminé après cette station de rétreint.

Dans une variante, le produit absorbant l'hydrogène forme une couche déposée sur la couche de catalyse. Dans ce cas il n'est pas indispensable que le matériau de remplissage, destiné à s'opposer à la progression de l'humidité dans le câble, ait lui-même des propriétés d'absorption de l'hydrogène. Dans cette variante, on peut aussi tirer profit des propriétés de collage du matériau constituant la couche absorbant l'hydrogène de façon à éviter le soudage des bords longitudinaux de la bande métallique. Il suffit dans ce cas de recouvrir l'une sur l'autre les rives de la bande.

Sur la figure 3, on a représenté une bande 50 comportant, d'une part, la bande métallique proprement dite 20, d'autre part, une couche 22 de nickel et/ou de chrome formant un catalyseur sur une face de la bande métallique, et d'autre part enfin, une couche 52 de produit absorbant l'hydrogène déposée sur la couche 22 de catalyseur. La couche 52 est par exemple composée de polymère par exemple tel que l'EVA et/ou l'EEA, qui peut avantageusement permettre de coller le tube lors de sa formation.

Quel que soit le mode de réalisation, on a intérêt à maximiser la surface spécifique du catalyseur en contact avec le produit absorbant l'hydrogène. A cet effet, la couche 22 de catalyseur présente, de préférence, une surface rugueuse. La rugosité est obtenue par exemple en pulvérisant de la poudre de nickel et/ou de chrome sur la surface métallique ou en prévoyant des rainures, notamment longitudinales dans cette couche du catalyseur.

## Revendications

1. Câble à tube métallique sensiblement étanche logeant au moins un conducteur optique et un produit absorbant l'hydrogène, la face interne du tube (20) étant recouverte au moins partiellement par une couche (22) en un matériau de catalyse, ladite couche (22) étant elle-même recouverte au moins partiellement par au moins une couche (30 ; 52) du produit absorbant l'hydrogène **caractérisé en ce que** le matériau de catalyse est un matériau de catalyse de la réaction d'absorption de l'hydrogène par le produit absorbant l'hydrogène et **en ce que** le produit absorbant l'hydrogène comprend au moins un polymère afin d'empêcher l'altération des propriétés de transmission des fibres optiques par exposition à l'hydrogène.

2. Câble selon la revendication 1 tel que la couche (22) en matériau de catalyse est appliqué en pulvérisant le catalyseur sous forme granuleuse.

3. Câble selon la revendication 1 tel que la couche (22) en matériau de catalyse présente des rainures longitudinales.

4. Câble selon l'une quelconque des revendications précédentes tel que le tube comporte au moins partiellement, sur sa surface extérieure, une couche de protection contre la corrosion qui est sensiblement composée du même matériau de catalyse que celui de la couche (22) présente sur sa surface interne.

5. Câble selon l'une quelconque des revendications précédentes tel que ledit polymère est choisi dans le groupe formé par l'EVA (Ethylène Vinyl Acétate) et l'EEA (Ethylène Ethyl Acrylate).

6. Câble selon selon l'une quelconque des revendications précédentes tel que ledit polymère présente des doubles liaisons qui s'ouvrent en présence du catalyseur de façon à fixer de l'hydrogène sur les doubles liaisons ouvertes.

7. Câble selon l'une quelconque des revendications précédentes tel que le catalyseur comprend un élément du groupe VIII, périodes 4, 5 et 6, de la classification périodique des éléments.

8. Câble selon la revendication 7 tel que le catalyseur comprend du nickel ou du chrome.

9. Câble selon l'une des revendications 1 à 8 tel que le tube étanche est en acier doux.

10. Câble selon l'une des revendications 1 à 9 tel que le produit absorbant d'hydrogène constitue un matériau de remplissage du tube (30).

11. Câble selon l'une des revendications 1 à 9 tel que le produit absorbant l'hydrogène forme seulement une couche (52) déposée sur la couche (22) en matériau de catalyse.

12. Câble selon la revendication 11 tel que la couche (52) de produit absorbant l'hydrogène présente des propriétés de collage.

13. Câble selon l'une des revendications 1 à 12 tel que le polymère est à base de silicone ou de polyoléfine.

14. Procédé de fabrication d'un câble selon la revendication 11 tel que l'on part d'une bande de métal recouverte sur sa surface interne du matériau catalyseur, en ce qu'on procède au formage de cette bande de métal de façon à lui conférer la forme d'un tube, en ce qu'on introduit, dans le tube, le(s) conducteur(s) optique(s) et un produit de remplissage un produit absorbant l'hydrogène comprenant au moins un polymère et un produit catalysant la réaction d'absorption de l'hydrogène, en ce qu'on soude les bords longitudinaux de la bande de métal, et en ce qu'on rétreint le tube formé après soudage.

15. Procédé de fabrication d'un câble selon l'une des revendications 12 ou 13 tel que l'on part d'une bande de métal recouverte sur sa surface interne du matériau catalyseur, ce matériau catalyseur étant lui-même recouvert par une couche de produit absorbant l'hydrogène, en ce qu'on procède au formage de cette bande de métal de façon à lui conférer la forme d'un tube par recouvrement l'une sur l'autre des rives longitudinales de la bande de métal, et en ce qu'on colle ces rives.

16. Procédé selon la revendication 15 tel que la couche de produit absorbant d'hydrogène est utilisée pour le collage.

## Claims

1. Cable having a substantially impervious metallic tube accommodating at least one optical conductor and a hydrogen-absorbing substance, the inner face of the tube (20) being covered at least in part by a layer (22) of a catalytic material, said layer (22) being itself covered at least in part by at least one layer (30; 52) of the hydrogen-absorbing substance, **characterised in that** the catalytic material is a material catalysing the hydrogen-absorbing reaction of the hydrogen-absorbing substance and **in that** the hydrogen-absorbing substance comprises at least one polymer in order to prevent the deterioration of the transmission properties of the optical fibres as a result of exposure to hydrogen.

2. Cable according to claim 1, wherein the layer (22) of catalytic material is applied by spraying the catalyst in granular form.

3. Cable according to claim 1, wherein the layer (22) of catalytic material has longitudinal grooves.

4. Cable according to any one of the preceding claims, wherein the tube bears at least in part, on its outer surface, an anti-corrosion protection layer which is substantially composed of the same catalytic material as that of the layer (22) present on its inner surface.

5. Cable according to any one of the preceding claims, wherein said polymer is selected from the group formed by EVA (Ethylene Vinyl Acetate) and EEA (Ethylene Ethyl Acrylate).

6. Cable according to any one of the preceding claims, wherein said polymer has double bonds which open in the presence of the catalyst so as to fix hydrogen to the opened double bonds.

7. Cable according to any one of the preceding claims, wherein the catalyst comprises an element of group VIII, periods 4, 5 and 6, of the periodic table of elements.

8. Cable according to claim 7, wherein the catalyst comprises nickel or chromium.

9. Cable according to one of claims 1 to 8, wherein the impervious tube is made of mild steel.

10. Cable according to one of claims 1 to 9, wherein the hydrogen-absorbing substance constitutes a filler material of the tube (30).

11. Cable according to one of claims 1 to 9, wherein the hydrogen-absorbing substance forms only a layer (52) laid down on the layer (22) of catalysis material.

12. Cable according to claim 11, wherein the layer (52) of hydrogen-absorbing substance has adhesive properties.

13. Cable according to one of claims 1 to 12, wherein the polymer is silicone-based or polyolefin-based.

14. Method of producing a cable according to claim 11, wherein a metal strip being covered on its inner surface by the catalyst material is used as starting material, a substance catalysing the hydrogen-absorbing reaction, that metal strip is formed so as to give it the shape of a tube, there are introduced into the tube the optical conductor(s) and a filler substance, a
hyrdogen-absorbing substance comprising at least one polymer, the longitudinal edges of the metal strip are welded, and the tube formed after welding is swaged.

15. Method of producing a cable according to one of claims 12 or 13, wherein a metal strip covered on its inner surface by the catalyst material is used as starting material, that catalyst material being itself covered by a layer of hydrogen-absorbing substance, that metal strip is formed so as to give it the shape of a tube by overlaying one of the longitudinal margins of the metal strip on the other, and those margins are caused to adhere.

16. Method according to claim 15, wherein the layer of hydrogen-absorbing substance is used for the adhesion.

## Patentansprüche

1. Kabel mit dichter metallischer Röhre, beinhaltend mindestens einen optischen Leiter sowie ein wasserstoffabsorbierendes Produkt, wobei die Innenseite der Röhre (20) mindestens teilweise mit einer Schicht (22) aus einem Katalysematerial überzogen ist, wobei die Schicht (22) selbst mindestens teilweise mit mindestens einer Schicht (30; 52) des wasserstoffabsorbierenden Produktes überzogen ist, **dadurch gekennzeichnet, dass** das Katalysematerial ein Katalysematerial für die Reaktion der Absorption des Wasserstoffs durch das wasserstoffabsorbierende Produkt ist und dass das wasserstoffabsorbierende Produkt mindestens ein Polymer umfasst, um die Veränderung der Übertragungseigenschaften der optischen Fasern durch Exposition gegenüber Wasserstoff zu verhindern.

2. Kabel gemäß Anspruch 1, wobei die Schicht (22) aus Katalysematerial aufgetragen wird, indem der Katalysator in körniger Form pulverisiert wird.

3. Kabel gemäß Anspruch 1, wobei die Schicht (22) aus Katalysematerial Längsrillen aufweist.

4. Kabel gemäß einem der vorangehenden Ansprüche, wobei die Röhre wenigstens teilweise auf ihrer Außenseite eine Schutzschicht gegen die Korrosion trägt, welche genau aus dem selben Katalysematerial besteht wie das der Schicht (22), die auf ihrer Innenseite vorhanden ist.

5. Kabel gemäß einem der vorangehenden Ansprüche, wobei das Polymer aus der Gruppe ausgewählt ist, die von EVA (Ethylen-Vinylacetat) und EEA (Ethylen-Ethylacrylat) gebildet wird.

6. Kabel gemäß einem der vorangehenden Ansprüche, wobei das Polymer Doppelbindungen aufweist, die sich in Gegenwart des Katalysators so öffnen, dass der Wasserstoff an den offenen Doppelbindungen fixiert wird.

7. Kabel gemäß einem der vorangehenden Ansprüche, wobei der Katalysator ein Element der Gruppe VIII, Perioden 4, 5 und 6 des Periodensystems der Elemente umfasst.

8. Kabel gemäß Anspruch 7, wobei der Katalysator Nickel oder Chrom umfasst.

9. Kabel gemäß einem der Ansprüche 1 bis 8, wobei die dichte Röhre aus Flussstahl ist.

10. Kabel gemäß einem der Ansprüche 1 bis 9, wobei das wasserstoffabsorbierende Produkt ein Füllmaterial der Röhre (30) bildet.

11. Kabel gemäß einem der Ansprüche 1 bis 9, wobei das wasserstoffabsorbierende Produkt nur eine Schicht (52) bildet, die auf der Schicht (22) aus Katalysematerial abgeschieden ist.

12. Kabel gemäß Anspruch 11, wobei die Schicht (52) des wasserstoffabsorbierenden Produkts Klebeeigenschaften aufweist.

13. Kabel gemäß einem der Ansprüche 1 bis 12, wobei das Polymer auf der Basis von Silicium oder Polyolefin ist.

14. Verfahren zur Herstellung eines Kabels gemäß Anspruch 11, wobei man von einem Metallstreifen ausgeht, der auf seiner Innenseite mit Katalysatormaterial überzogen ist, dass die Reaktion der Absorption des Wasserstoffs katalysiert, man eine Formung dieses Metallstreifens so durchführt, dass er die Form einer Röhre erhält, man in die Röhre den optischen Leiter/die optischen Leiter und ein Füllmaterial, ein wasserstoffabsorbierendes Produkt, das wenigstens ein Polymer umfasst, einführt, man die Längsränder des Metallstreifens zusammenschweisst und man die gebildete Röhre nach dem Schweissen im Querschnitt verringert.

15. Verfahren zur Herstellung eines Kabels gemäß Ansprüche 12 oder 13, wobei man von einem Metallstreifen ausgeht, der auf seiner Innenseite mit dem Katalysatormetall überzogen ist, dieses Katalysatormaterial selbst von einer Schicht aus wasserstoffabsorbierendem Produkt überzogen ist, man die Formung dieses Metallstreifens, um in die Form einer Röhre zu verleihen, durch Überlappung der Längsränder des Metallstreifens durchführt und man diese Ränder verklebt.

16. Verfahren gemäß Anspruch 15, wobei die Schicht aus wasserstoffabsorbierendem Produkt für das Kleben verwendet wird.
